# EUROPÄISCHE PATENTSCHRIFT

(11) **EP 1 195 219 B1**
(45) Veröffentlichungstag und Bekanntmachung des Hinweises auf die Patenterteilung: **15.11.2006**
(21) Anmeldenummer: 01000429.9
(22) Anmeldetag: 06.09.2001
(51) Int. Cl.: B23K 10/02, B05B 7/22, B23K 1/00

(54) **Verfahren zum Löten einer Verbindungsfuge oder Verbindungsnaht zwischen zwei verzinkten Blechen**
A method for brazing a connecting joint or joining seam between two pieces of galvanized sheet metal
Procédé pour braser la jonction entre deux tôles galvanisées

(30) Priorität: 07.09.2000 AT 6532000 U; 07.06.2001 AT 4592001 U
(43) Veröffentlichungstag der Anmeldung: 10.04.2002
(73) Patentinhaber: Inocon Technologie Gesellschaft m.b.H, 4800 Attnang-Puchheim (AT)
(72) Erfinder: Schwankhart, Gerhard, 4800 Attnang-Puchheim (AT)
(74) Vertreter: KLIMENT & HENHAPEL

(56) Entgegenhaltungen:
- EP-A- 0 498 154
- WO-A-98/21000
- GB-A- 891 398
- US-A- 4 191 319
- PATENT ABSTRACTS OF JAPAN vol. 015, no. 404 (M-1168), 15. Oktober 1991 (1991-10-15) & JP 03 165968 A (AISIN SEIKI CO LTD), 17. Juli 1991 (1991-07-17)
- PATENT ABSTRACTS OF JAPAN vol. 1999, no. 09, 30. Juli 1999 (1999-07-30) & JP 11 105742 A (TOYOTA AUTO BODY CO LTD), 20. April 1999 (1999-04-20)

## Beschreibung

Die Erfindung bezieht sich auf ein Verfahren gemäß dem Oberbegriff des Anspruches 1, welches aus der WO-A-9821000 bekannt ist.

Zinkbeschichtungen werden bei Blechen als Korrosionsschutz eingesetzt und finden, etwa bei der Erzeugung von Karosserieblechen, breite Verwendung. Die weitere Verarbeitung solcher zinkbeschichteter Bleche bereitet allerdings Schwierigkeiten, weil etwa das Verschweißen solcher Bleche mit den meisten Schweißverfahren nur bedingt möglich ist. Die Zinkbeschichtung verursacht nämlich eine starke Entwicklung von Schweißspritzern. So stört der Zinkdampf den Schweißvorgang beim Lichtbogenschweißen beträchtlich, weil der Lichtbogen instabil wird und zu verstärktem Kathodenverschleiß und Aufdampfen des Zinks an ungünstigen Stellen führt. Auch die Verwendung des besonders bei Leichtmetallen bevorzugt eingesetzten Wolfram-Inertgas-Schweißens ist durch das Auftreten dieser Zinkspritzer stark beeinträchtigt.

Eine übliche Vorgangsweise ist es daher, mit mechanischen Verfahren (z.B. bördeln) eine Verbindung herzustellen und mit Klebern noch vorhandene Verbindungsfugen auszufüllen, um so die Verbindung zu festigen. Aufgrund der bekannten Nachteile des Klebens (etwa die Notwendigkeit der verrutschungsfreien Lagerung der zu klebenden Teile oder der Vorbehandlung der Oberflächen, geringe Dauerfestigkeit) werden auch Lötverfahren verwendet. Aufgrund der problematischen Eigenschaften von Zink arbeitet man dabei mit speziellen Loten, wie Kupfer/Siliziumloten. Diese Lote liegen mit ihrer Verarbeitungstemperatur im Bereich des Schmelzpunktes von Zink oder darunter, sodass das Zink nicht verdampft. Dem gegenüber stehen als Nachteile die hohen Kosten dieser Speziallote und der unangenehme Effekt, dass diese Lote nach dem Überlackieren nach einiger Zeit durch die Lackschicht diffundieren und die Lötbahnen als Verfärbung sichtbar werden.

Ziel der Erfindung ist ein Verfahren der eingangs erwähnten Art, das diese Nachteile vermeidet und die Vorteile des Lötens erhält.

Erfindungsgemäß wird dies durch die kennzeichnenden Merkmale des Anspruches 1 erreicht.

Durch die Maßnahmen, dass im Verbindungsbereich Zusatzmaterial in Form einer Folie auf eines der beiden Bleche aufgelegt wird, die beiden Bleche im Verbindungsbereich gebördelt werden, wobei die Folie im gebördelten Bereich zwischen den beiden Blechen angeordnet ist und der gebördelte Bereich anschließend mittels eines Plasmastrahles erhitzt wird, wobei die Schmelztemperatur des Zusatzmaterials erreicht wird, ohne die Schmelztemperatur der Zinkbeschichtung bzw. der Bleche zu erreichen, werden die erwähnten, beim Schweißen auftretenden Nachteile vermieden.

Es zeigt sich weiters, dass sich zinkbeschichtete Werkstoffe mit Zinn als Zusatzwerkstoff bei der Verwendung eines Plasmastrahles ohne erhebliche Entstehung von Zinkspritzern verarbeiten lassen.

Das erfindungsgemäße Lötverfahren mittels Plasmastrahl wird etwa durch ein Plasmalötgerät erzeugt, wobei die Temperatur des Plasmas über dem Schmelzpunkt von Zinn liegt, jedoch unter dem Schmelzpunkt der zu verbindenden Bleche und der Zinkbeschichtung.

Die spritzerfreie Verarbeitung von Zink mit einem Plasmastrahl ist auf die besonderen Eigenschaften von Plasma zurückzuführen. Plasma ist ein sich bewegender elektrischer Leiter, der stromdurchflossen ist und dadurch um sich ein konzentrisches elektromagnetisches Feld bildet, das den Plasmastrahl im Durchmesser einschnürt. Das in das Plasma eingeführte Zink wird ionisiert und unterliegt dadurch ebenfalls dem Einschnüreffekt, was das Entstehen von Zinkspritzer unterbindet.

Das Plasmaschweißgerät muss keine spezielle Ausführungsform haben. Die Regelung der optimalen Energiezufuhr, bei der die Temperatur des Plasmas über dem Schmelzpunkt von Zink, aber unter dem Schmelzpunkt der zu verbindenden Werkstücke liegt, erfolgt dadurch, dass unterschiedliche Parameter wie Leistungseinstellung der Stromquelle, Vorschubgeschwindigkeit, Düsenform- und Größe, Art des Kaltgases und dessen Strömungsmenge, Abstand von Kathode zum Werkstück sowie die Fläche an der Kathodenspitze aufeinander in geeigneter Weise abgestimmt werden.

Erwärmte metallische Werkstoffe verbinden sich rasch mit Sauerstoff und bilden eine Oxidschicht, die das Benetzen mit dem geschmolzenen Zink verhindert. Durch Verwendung einer Schutzgashülle wird eine Oxidation verhindert und die Qualität der Verbindung somit erhöht. Um eine höhere Festigkeit zu erhalten kann auch eine Legierung aus z.B. Zink und Nickel verwendet werden.

Eine spezielle Anwendung des erfindungsgemäßen Verfahrens ist in der Türenfertigung in der Autoindustrie gegeben, wo unter anderem zwei verzinkte Blechteile miteinander so zu verbinden sind, dass die Verbindung die Türkante bildet. Dies wird mittels einer speziellen Bördelung bewerkstelligt, bei der ein im Querschnitt L-förmiger Blechteil und ein im Querschnitt gerader Blechteil so aufeinander gelegt werden, dass der gerade Blechteil im L-förmigen Knick des anderen Blechteils anliegt. Der kürzere Schenkel des L-förmigen Blechteils wird dann umgebogen und der ebene Blechteil kommt so in einer Art Lasche des nunmehr U-förmigen anderen Blechteils zu liegen. Die so entstandene Verbindung kann nun mithilfe des erfindungsgemäßen Verfahrens verfestigt werden.

Die Merkmale des Anspruchs 2 beschreiben einen bevorzugten Abstand Plasmaquelle - Bleche, bei welchem besonders gute Ergebnisse erzielt werden.

Die Erfindung wird nun anhand von Zeichnungen illustriert. Dabei zeigen:
Fig. 1 die schematische Anordnung eines nicht erfindungsgemäßen Beispiels beim Schließen von Verbindungsfugen zwischen verzinkten Blechen unter Verwendung eines Plasmaschweißgerätes und eines Zinkdrahtes.

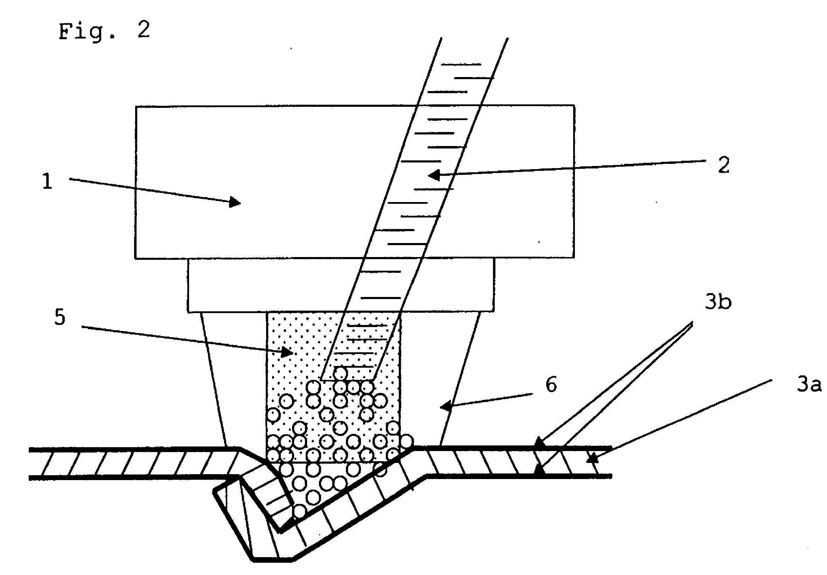

Fig. 2 ein nicht erfindungsgemäßes Beispiel einer mit Zink zu schließenden Verbindungsfuge zwischen zwei Stahlblechen zum Verfestigen der Verbindung.
Fig. 3 die schematische Anordnung eines nicht erfindungsgemäßen Beispiels beim Nachverzinken von Blechen.
Fig. 4 die mit Zink zu schließende Verbindungsnaht nach einem vorangegangenen Schweißvorgang zur Wiederherstellung des Korrosionsschutzes.
Fig. 5 eine schematische Ansicht eines Bleches, das mit einem anderen Blech gemäß der Erfindung verbunden werden soll.
Fig. 6 eine schematische Ansicht der zu verbindenden Bleche und deren relative Lagerung vor dem Bördeln des Außenbleches
Fig. 7 eine schematische Ansicht der zu verbindenden Bleche nach dem Bördeln des Außenbleches.
Fig. 8 eine schematische Ansicht der zu verbindenden Bleche nach dem Bördeln und während des Einsatzes eines Plasmastrahles gemäß der Erfindung.

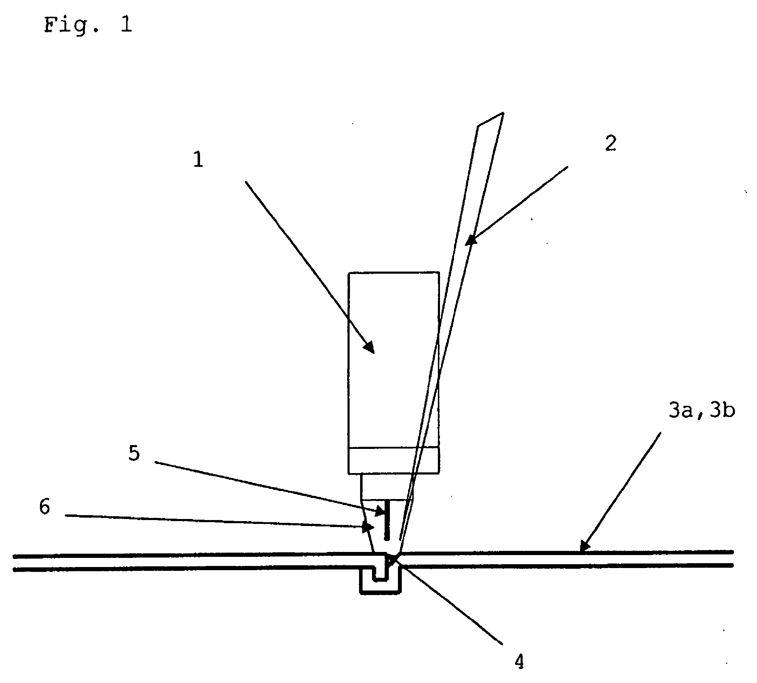

Der Plasmastrahl (5, Fig. 1) wird von einem entsprechenden Plasmaschweißgerät (1) erzeugt, wobei der Plasmastrahl (5) den Zinkdraht (2) zum Schmelzen bringt, aber nicht die zu verbindenden Stahlblechteile (3a). Der Zinkdraht (2) schmilzt und füllt die Verbindungsfuge (4). Vorzugsweise weist der Zinkdraht (2) den für die handelsüblichen Drahtvorschubgeräte notwendigen Durchmesser zwischen 0.8 und 1.6 mm auf. Durch die besonderen Eigenschaften des Plasmas (5) wird allerdings ein Spritzen des Zinks vermieden. Durch das gleichzeitige Einblasen eines Schutzgases, z.B. Argon oder Helium, wird eine Schutzgashülle (6) um das Schmelzbad des flüssigen Zinks in der Verbindungsfuge (4) erzeugt, die den Kontakt von Luftsauerstoff mit dem flüssigen Zink, aber auch mit erwärmten Teilen der zu verbindenden, verzinkten Stahlblechteile (3a, 3b)unterbindet. Damit wird ein optimales Benetzen der Verbindungsfuge (4) mit dem flüssigen Zink sicher gestellt. Die Schutzgasglocke wird dabei an die Form der Verbindungsfuge angepasst. Bei einer langen, geraden Naht wird vorzugsweise mit einer schmalen, langen Schutzgasglocke gearbeitet, während beispielsweise bei einer Orbitalnaht die Unterkante mit dem Radius der zu verbindenden Rohrstücke bei kleinem Spiel ausgestattet wird. Der Plasmastrahl (5) wird entlang der Verbindungsfuge (4) geführt, und die Fuge durch kontinuierlichen Nachschub des Zinkdrahtes (2) ohne Entstehung von problematischen Zinkspritzern geschlossen. Das Zink kann dabei auch als Zinklegierung, deren Schmelzpunkt ähnlich jenem von Zink ist, oder als Pulver oder Granulat zugeführt werden. Pulver oder Granulat werden dabei mit dem Schutzgasstrom (6) an die Fügestelle (4) transportiert. Die Verbindung zwischen den verzinkten Stahlblechen wird somit durch Einbringen eines artgleichen Materials gefestigt.

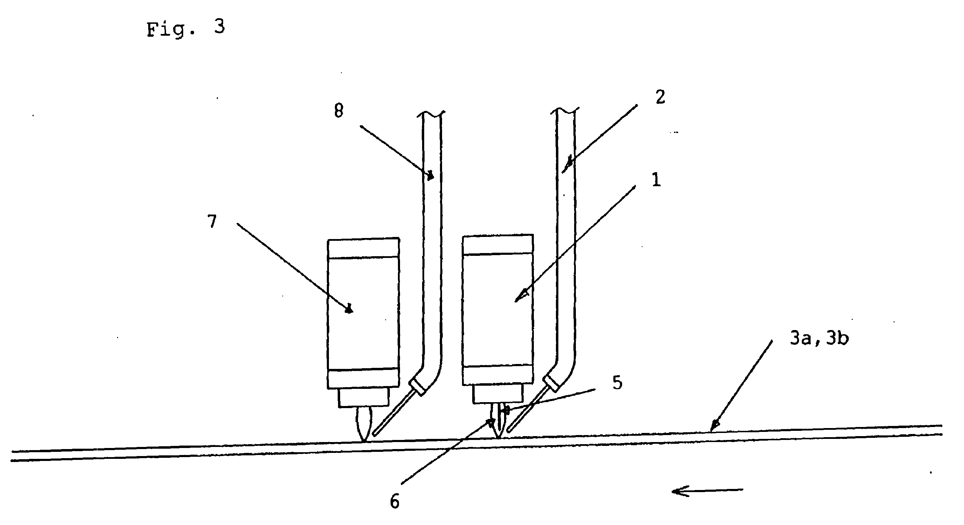

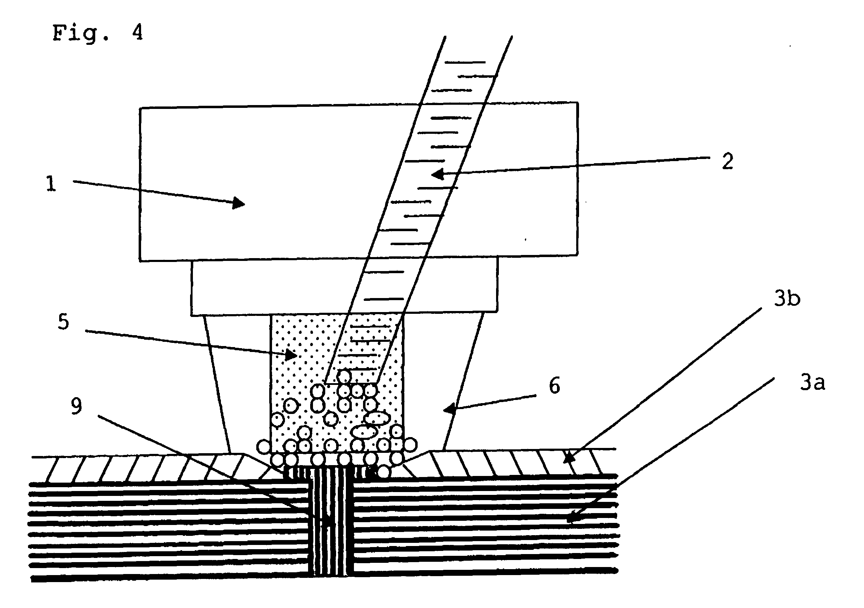

Eine weiteres Beispiel ist in Fig. 3 und 4 dargestellt. Durch das Verschweißen zinkbeschichteter Bleche (3a) wird die Zinkschicht (3b) zerstört, wie in Fig. 4 schematisch dargestellt. Die so entstandene Verbindungsnaht (9) ist somit nicht mit einer Zinkschicht bedeckt, sodass der Korrosionsschutz fehlt. Diese Verbindungsnaht (9) kann mit dem Verfahren geschlossen werden, indem Zink mit einem Plasmastrahl temperaturkontrolliert geschmolzen wird. Der Plasmastrahl (5, Fig. 3) wird wieder von einem entsprechenden Plasmaschweißgerät (1) erzeugt, wobei der Energieeintrag des Plasmastrahles (5) wiederum so bemessen ist, dass er den Zinkdraht (2) zum Schmelzen bringt, aber nicht die zu verbindenden Stahlblechteile (3a). Der Zinkdraht (2) schmilzt und schließt die Verbindungsnaht (9), die durch den vorangegangenen Schweißvorgang eines vorlaufenden Schweißgerätes (7) entsteht. Das vorlaufende Schweißgerät (7) und das nachlaufende Plasmaschweißgerät (1) sind dabei insofern gekoppelt, als sie gemeinsam in ihrem Vorschub starten und stoppen. Da beide Geräte (7, 1) allerdings einen unterschiedlichen Energieeintrag leisten müssen, dürfen sie nicht elektrisch gekoppelt sein; jedes Gerät (7, 1) ist mit seiner eigenen Stromversorgung ausgestattet und wird getrennt geregelt. Beide Geräte (7, 1) sind vorzugsweise an einem gemeinsamen Vorschubapparat montiert und bewegen sich entlang der durch das vorlaufende Schweißgerät (7) erzeugten Schweißnaht so, dass ein gleichmäßiges Schließen der Verbindungsnaht mit einer Zinkschicht erreicht wird, und so der lückenlose Korrosionsschutz wiederhergestellt wird. Das vorlaufende Schweißgerät (7) ist bevorzugt ebenfalls ein Plasmaschweißgerät. Für den Schweißdraht (8) des vorlaufenden Schweißgerätes (7) kann ein beliebiges Zusatzmaterial verwendet werden, es kann auch völlig auf ihn verzichtet werden. Durch die besonderen Eigenschaften des Plasmas (5) wird wieder ein Spritzen des Zinks vermieden.

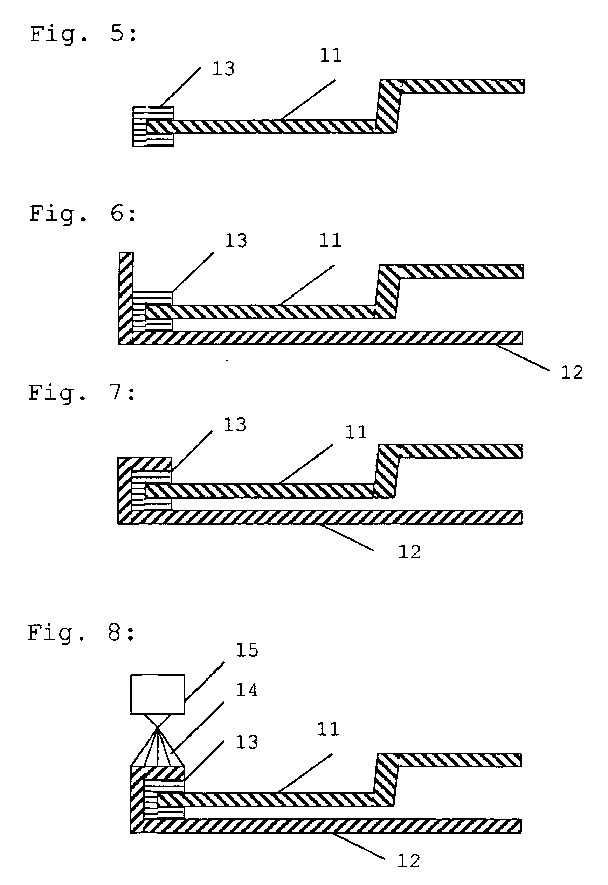

Eine Anwendungsform der Erfindung ist in den Figuren 5 bis 8 gezeigt. Es handelt sich dabei um eine spezielle Variante etwa für Autotüren -oder Klappen. In Fig. 5 wird schematisch dargestellt, wie Zusatzmaterial in Form einer Folie 13 um eine Kante des Innenblechs 11 über Bördelung aufgebracht wird. Blech 11 ist dabei beispielsweise der Rahmen des Türkörpers, Blech 12 (Fig. 6) ist die Verkleidung und bildet in umgebördelten Zustand dann die Türkante. Der Bereich der Umbördelung wird mit einer Folie 13, vorzugsweise aus Zinn oder einer Kupfer-Silizium Legierung, beispielsweise CuSi₃, versehen. Die Folie 13 kann mit oder ohne Flussmittel gefertigt sein. Sie enthält jedoch kein Blei und kein Cadmium. Die Folie 13 kann dabei etwa über elastische Formrollen zusätzlich angedrückt werden, wodurch sie fest am Kantengrat des Innenblechs 11 haftet und für die weiteren Bearbeitungsschritte ausreichend fixiert ist. Das mit der Folie 13 umbördelte Innenblech 11 wird anschließend in das vorgebogene Außenblech 12 eingelegt, sodass sich eine relative Anordnung von Innenblech 11 und Außenblech 12 gemäß Fig. 6 ergibt. Das Außenblech kann nun umgebördelt werden, sodass es die Folie 13 mit dem Zusatzmaterial und das Innenblech 11 umschließt (Fig. 7).

Anschließend wird, wie in Fig. 8 dargestellt, der Bereich der Bördelung mittels eines Plasmastrahles 14 erhitzt, wobei sich die Plasmaquelle 15 vorzugsweise in einem Abstand zwischen 8 und 12 mm, vorzugsweise 10 mm, von den Blechen 11, 12 befindet. Das Zusatzmaterial 13, das vorzugsweise als Folie aufgebracht wurde, schmilzt und beginnt im Verbindungsbereich zwischen Innenblech 11 und Außenblech 12 zu verrinnen. Durch den Plasmastrahl 14 wird zwar das Zusatzmaterial 13 geschmolzen, nicht jedoch die Zinkbeschichtung der Bleche 11, 12 und die Bleche 11, 12 selbst.

Nach Einsatz des Plasmastrahls 14 hat das Zusatzmaterial 13 den Verbindungsbereich im Bereich der Bördelung ausgefüllt und versiegelt. Die Zinkbeschichtung ist weiterhin intakt und verhindert Korrosion. Die Autotüre ist sofort fest und kann mit hoher Geschwindigkeit weitergehandhabt werden, beispielsweise lackiert werden.

In den meisten Fällen werden die zu verarbeitenden Innen- und Außenbleche 11, 12 aufgrund der vorangegangenen Fertigungs- und Bearbeitungsschritte mit einem leichten Ölfilm verunreinigt sein. In solchen Fällen ist eine Vorbehandlung vorteilhaft, die einerseits den Ölfilm entfernt, aber andererseits auch Oxidschichten von den in der Regel zinkbeschichteten Blechoberflächen entfernt und sie somit "aktiviert". Dazu ist ein gepulster Plasmastrahl gut geeignet, da er Reinigung und Aktivierung der Blechoberflächen erzielt, ohne dabei die Zinkbeschichtung zu beeinträchtigen.

Die Vorteile der Erfindung liegen darin, dass der Verbindungsbereich der beiden Bleche 11, 12 nach der Plasmastrahlbehandlung sofort verzugsfest ist, während beim üblichen Verkleben der Bleche die Verbindung erst nach geraumer Zeit fest wird und die Bleche in der Zwischenzeit sehr vorsichtig gehandhabt werden müssen. Außerdem kann das Verbinden zweier Bleche gemäß dieser Anwendungsform rascher erfolgen, da im Vergleich zum Kleben weniger Arbeitsschritte erforderlich sind. Die Festigkeit der Verbindung ist dabei bedeutend höher als bei Klebetechniken, was auch leichtere Türkonstruktionen ermöglicht.

## Patentansprüche

1. Verfahren zum Löten von Bördelverbindungen zweier verzinkter Bleche (1,2) mittels eines Plasmastrahls (4), wobei die Schmelztemperatur eines Zusatzmaterials (3) erreicht wird, ohne die Schmelztemperatur der Zinkbeschichtung bzw. der Bleche (1,2) zu erreichen, **dadurch gekennzeichnet, dass** im Verbindungsbereich das Zusatzmaterial (3) in Form einer Folie auf eines der beiden Bleche (1,2) aufgelegt wird, die beiden Bleche (1,2) im Verbindungsbereich gebördelt werden, wobei die Folie im gebördelten Bereich zwischen den beiden Blechen (1,2) angeordnet ist und der gebördelte Bereich anschließend mittels eines Plasmastrahles (4) erhitzt wird, und als Zusatzmaterial Zink, eine Zinklegierung, deren Schmelzpunkt ähnlich jenem von Zink ist, Zinn, eine Zinnlegierung, oder eine Kupfer-Silizium-Legierung verwendet wird.

2. Verfahren nach Anspruch 1, **dadurch gekennzeichnet, dass** der Abstand der Plasmaquelle von den Blechen (1,2) zwischen 8 und 12 mm, vorzugsweise 10mm beträgt.

## Claims

1. A method for soldering edge-formed joints of two zinc-coated sheets (1, 2) by means of a plasma jet (4), with the melting temperature of an additional material (3) being reached without reaching the melting temperature of the zinc coating or the sheets (1, 2), **characterized in that** in the joining area the additional material (3) in the form of a foil is placed on one of the two sheets (1, 2), the two sheets (1, 2) are edge-formed in the joining area, with the foil being arranged in the edge-formed area between the two sheets (1, 2) and the edge-formed area is thereafter heated by means of a plasma jet (4), and zinc, a zinc alloy whose melting point is similar to that of zinc, tin, a tin alloy or a copper-silicon alloy is used as an additional material.

2. A method according to claim 1, **characterized in that** the distance of the plasma source from the sheets (1, 2) is between 8 and 12 mm, preferably 10 mm.

## Revendications

1. Procédé de brasage de joints à bords relevés de deux tôles galvanisées (1, 2) au moyen d'un jet de plasma (4), où est atteinte la température de fusion d'un matériau supplémentaire (3), sans atteindre la température de fusion du revêtement de zinc ou des tôles (1, 2), **caractérisé en ce que**, dans la zone du joint, le matériau supplémentaire (3), se présentant sous la forme d'une feuille, est appliqué sur l'une des deux tôles (1, 2), les deux tôles (1, 2) sont rabattues au niveau des bords dans la zone du joint, où la feuille est disposée dans la zone des bords rabattus, entre les deux tôles (1, 2), et la zone à bords rabattus est chauffée ensuite au moyen d'un jet de plasma (4) et, comme matériau supplémentaire, on utilise du zinc, un alliage de zinc dont le point de fusion est semblable à celui du zinc, et on utilise de l'étain, un alliage à l'étain ou un alliage de cuivre et de silicium.

2. Procédé selon la revendication 1, **caractérisé en ce que** la source de plasma est à une distance, par rapport aux tôles (1, 2), comprise entre 8 mm et 12 mm, de préférence égale à 10 mm.
